# EUROPEAN PATENT APPLICATION

(11) **EP 3 957 781 A1**
(43) Date of publication of application: **23.02.2022**
(21) Application number: 20835004.1
(22) Date of filing: 17.06.2020
(51) Int. Cl.: D01F 6/60, C09J 163/00, B32B 3/12

(54) **ARAMID 1313 MESH FIBERS AND PREPARATION METHOD THEREFOR, ARAMID EPOXY RESIN GLUE AND PREPARATION METHOD THEREFOR**

(30) Priority: 02.07.2019 CN 201910591470
(71) Applicant: CRRC Changchun Railway Vehicles Co., Ltd., Changchun, Jilin 130000 (CN)
(72) Inventor: DENG, Hai, Changchun, Jilin 130000 (CN); DONG, Xueyan, Changchun, Jilin 130000 (CN); JIN, Xiaoming, Changchun, Jilin 130000 (CN); JIN, Jing, Changchun, Jilin 130000 (CN); LIU, Tao, Changchun, Jilin 130000 (CN)
(74) Representative: Herrmann, Uwe
(86) International application number: PCT/CN2020/096445
(87) International publication number: WO 2021/000727

(57) **Abstract**

Provided are aramid 1313 mesh fibers, which are flocculent fiber mass form aramid 1313 fibers, and aramid 1313 fiber filaments are interwoven to form a three-dimensional mesh structure. The aramid 1313 mesh fibers are used in an epoxy resin glue to obtain an aramid epoxy resin glue, and the aramid epoxy resin glue is used to prepare an aramid paper honeycomb composite part.

## Description

This application claims the priority to Chinese Patent Application No. 201910591470.2, titled "ARAMID 1313 MESH FIBERS AND PREPARATION METHOD THEREFOR, ARAMID EPOXY RESIN GLUE AND PREPARATION METHOD THEREFOR", filed on July 02, 2019 with the China National Intellectual Property Administration, which is incorporated herein by reference in entirety.

### FIELD

The present disclosure belongs to the technical field of aramid epoxy resin glues, and specifically relates to an aramid 1313 reticular fiber and a method for preparing the same, an aramid epoxy resin glue and a method for preparing the same, and in particular to an aramid 1313 reticular fiber and a method for preparing the same, a series of room temperature curable aramid flame-retardant epoxy resin structural glues and a method for preparing the same, and an aramid paper honeycomb composite part.

### BACKGROUND

Adhesive, also called as cement, or commonly called as glue for short, refers to a group of natural or synthetic, organic or inorganic substances that are capable of holding two or more parts or materials together through interface adhesion or cohesion. Briefly, adhesive refers to a substance that is capable of bonding the adherend together through adhesion. Gluing (including adhering, bonding, adhesive bonding, and adhesive joining) refers to a technique that bonds the surfaces of homogeneous or heterogeneous objects by use of an adhesive, which is applicable to bonding complex components, of different materials, and with different thickness and ultra-thin specifications. Gluing has been developed fast and widely applied in modern times. Adhesive can be classified in various way. For example, according to its applying method, it can be divided to thermosetting type, hot melt type, room temperature curing type, pressure sensitive type, etc. Among them, thermosetting adhesive is a class of mostly used glue, mainly including epoxy resins, phenolic resins, urea-formaldehyde resins, melamine-formaldehyde resins, silicone resins, furan resins, unsaturated polyester, acrylic resins, polyimide, polybenzimidazole, phenolic aldehyde-polyvinyl acetal, phenolic aldehyde-polyamide, phenolic aldehyde-epoxy resins, and epoxypolyamide. However, bonding and curing of thermosetting adhesives often need heating, which brings great inconvenience to its application and limitation on its further application.

Now, the high-speed and high-efficiency society has necessitated more convenient and rapid transportation, as well as lightweight design of various vehicles (transportation tools) for energy-saving, environmental protection, and high speed. The aramid paper honeycombs as aviation materials have advantages, such as low density, high strength, no thermal expansion and contraction, no metal fatigue, flame retardant, non-toxic, and low temperature resistance. Such aramid paper honeycomb core parts have also been applied as high-speed rail vehicle interior materials in large quantities in the development of high-speed trains in China.

However, in the process of transferring from aviation to civilian use, the most common production process of aramid honeycomb composite parts is steel mold hot pressing, vacuum tank hot pressing, or vacuum bag heat recovery. They are not only of high energy consumption and high equipment cost, but of low production efficiency, and need large equipment including high-temperature hot press, large vacuum tanks, and high temperature ovens. It is difficult to achieve large-scale and low-cost production, resulting in expensive products, and especially in limitation on customized processing of the products, which has badly limited the development and wide application of aramid paper honeycomb composite parts.

Therefore, how to develop a suitable resin glue and its production method, which is curable at room temperature and has good performance, and can overcome the above-mentioned shortcomings of the current aramid honeycomb composite parts, and meets the related standards of aramid paper honeycomb composite parts, has become one of the urgent problems for manufacturers in this field.

### SUMMARY

In view of that, the technical problem to be solved by the present disclosure is to provide an aramid 1313 reticular fiber and a method for preparing the same, as well as an aramid epoxy resin glue and a method for preparing the same, and particularly an aramid flame-retardant epoxy resin structural glue series which are curable at room temperature. The aramid flame-retardant epoxy resin structural glue series provided by the present disclosure have good bonding properties, and can also be used for edge banding and molding, to further meet various aspects of needs.

The present disclosure provides an aramid 1313 reticular fiber, which is a flocculent fiber cluster aramid 1313 fiber, and aramid 1313 fiber filaments are interwoven to form a three-dimensional reticular structure.

Preferably, the aramid 1313 reticular fiber has a fineness of 1-2 D;
microscopically, the aramid 1313 reticular fiber has a microscopic three-dimensional reticular structure formed by mutual cross-linking of filaments, strips and films;
the filaments have a diameter of 10-500 nm;
the strips have a diameter of 0.5-20 µm; and
the films have a diameter of 5-50 µm.

The present disclosure provides a method for preparing an aramid 1313 reticular fiber comprising the following steps:
1) spraying a polymerized aramid 1313 slurry into a coagulating liquid, and performing coagulation and precipitation under stirring to obtain a wet fiber cluster; and
2) subjecting the wet fiber cluster obtained from the above step to hot air drying, to obtain a fluffy aramid 1313 reticular fiber.

Preferably, the coagulating liquid includes dimethylacetylamide solution;
the aramid 1313 slurry is sprayed at a flow rate less than or equal to 1000 mL/min;
the aramid 1313 slurry and the coagulating liquid are present in a mass ratio of 1: (2-20);
the coagulation and precipitation are performed for a duration of 5-40 min; and
the hot air drying is performed at a temperature of 60-85°C.

The present disclosure provides a aramid epoxy resin glue, based on mass percentage of raw materials, comprising:
90-94 parts by weight of an epoxy resin;
3.5-7.5 parts by weight of silicon dioxide;
0-10 parts by weight of a foamed filler; and
0.3-0.5 parts by weight of an aramid 1313 reticular fiber.

Preferably, the epoxy resin includes a flame-retardant epoxy resin;
the aramid 1313 reticular fiber has a length of 1-7 mm;
the aramid 1313 reticular fiber has an aspect ratio of (50-1000): 1;
the silicon dioxide includes a fumed silica powder;
the foamed filler includes a hollow glass microsphere and/or a nano hollow floating powder;
the aramid epoxy resin glue includes one or more of an aramid epoxy resin edge-sealing glue, an aramid epoxy resin filling glue and an aramid epoxy resin molding glue;
in the aramid epoxy resin edge-sealing glue or the aramid epoxy resin filling glue, the silicon dioxide is present in an amount of 3.5-5.7 parts by weight, based on mass percentage of raw materials; and
in the aramid epoxy resin molding glue, the silicon dioxide is present in an amount of 5.7-7.5 parts by weight, based on mass percentage of raw materials.

Preferably, the silicon dioxide has a particle size of 12 nm-6 µm;
the aramid epoxy resin edge-sealing glue has a density of 0.6-1.0 g/cm³;
the aramid epoxy resin edge-sealing glue is used for edge banding of a lightweight honeycomb composite material;
the aramid epoxy resin filling glue has a density of 1.4-1.6 g/cm³;
the aramid epoxy resin filling glue is used for bonding hardware on a resin composite material;
the aramid epoxy resin molding glue has a density of 0.9-1.6 g/cm³;
the aramid epoxy resin molding glue is dough-like before curing; and
the aramid epoxy resin molding glue is used for modeling on a resin composite material.

The present disclosure provides a method for preparing the aramid epoxy resin glue described in any one of the above technical solutions, comprising the following step:
a) mixing an aramid 1313 reticular fiber, an epoxy resin and silicon dioxide, to obtain an aramid epoxy resin glue.

Preferably, in step a), a foamed filler is further included;
the mixing is performed for a duration of 10-30 min;
the aramid epoxy resin glue is added with a curing aid before use;
the curing aid includes a modified amine curing agent, an accelerating agent and a coupling agent;
the aramid epoxy resin glue and the curing aid have a mass ratio of 4: 1; and
the aramid epoxy resin glue has an open time of 30-40 min.

The present disclosure further provides an aramid paper honeycomb composite part, comprising prepreg cured sheets, an aramid paper honeycomb core and a Honeycon glue; wherein
the aramid paper honeycomb core is compounded between the prepreg cured sheets, forming a sandwich structure;
the Honeycon glue includes a Honeycon bonding glue;
the Honeycon bonding glue is bonded between the aramid paper honeycomb core and the prepreg cured sheets; and
the Honeycon glue is the aramid epoxy resin glue described in any one of the above technical solutions or the aramid epoxy resin glue prepared using the method described in any one of the above technical solutions.

Preferably, the Honeycon glue further includes a Honeycon edge-sealing glue; and
the Honeycon edge-sealing glue is used for edge banding of the aramid paper honeycomb composite part.

The prepreg cured sheets include glass fiber and/or carbon fiber prepreg cured sheets;
the Honeycon glue may also be filled and pre-embedded in any position of the aramid paper honeycomb composite part; and
the aramid paper honeycomb composite part further includes a hardware.

Preferably, the any position includes the position where machining or manual processing is needed in a later stage;
manners of the processing include one or more of size positioning, edge trimming, hole opening and grooving;
the hardware is arranged at the position where the Honeycon glue is filled and pre-embedded or post-embedded; and
the hardware can also be used in combination with the Honeycon glue when it is arranged.

Preferably, the prepreg cured sheet includes a double-layer prepreg cured sheet and/or a multilayer prepreg cured sheet;
the double-layer prepreg cured sheet has a thickness of 0.3-0.36 mm;
the multilayer prepreg cured sheet has a thickness greater than or equal to 0.45 mm;
the prepreg cured sheet contains resin in an amount of 35%-65%; and
the prepreg cured sheet contains volatile constituents in an amount less than or equal to 8%.

Preferably, the aramid paper honeycomb core has one or more shapes including a regular hexagonal honeycomb core, a polygonal honeycomb core, a corrugated honeycomb core and an overstretched honeycomb core;
the aramid paper honeycomb core has a cell size of 1.83-3.67 mm;
the aramid paper honeycomb core has a density of 32-120 kg/m³; and
the aramid paper honeycomb core has a height of 1-860 mm.

The present disclosure further provides a method for preparing an aramid paper honeycomb composite part, comprising the following step:

A) bonding an aramid paper honeycomb as a core material and a prepreg cured sheet as a surface material by using a Honeycon bonding glue, performing mold closing and curing under pressure, and then performing edge banding by using a Honeycon edge-sealing glue, to obtain an aramid paper honeycomb composite part.

Preferably, the mold closing and curing under pressure are performed at a temperature of 25-60°C;
the mold closing and curing under pressure have an initial curing time of 3-48 hours;
the mold closing and curing under pressure have a full curing time of 1-7 days;
the mold closing and curing under pressure are performed at a pressure of 0.1-0.3 MPa;
the prepreg cured sheet is obtained by performing curing under heat and pressure on a glass fiber and/or carbon fiber prepreg;
the curing under heat and pressure is performed at a temperature of 120-150°C;
the curing under heat and pressure is performed at a duration of 25-330 minutes; and
the curing under heat and pressure is performed at a pressure of 0.1-0.3 MPa.
Preferably, before the bonding, the method further comprises a pre-treatment step;
the pre-treatment includes one or more of cutting, polishing, degreasing and dedusting;
the Honeycon bonding glue is used in an amount of 300-350 g/m²;
after the bonding, the method further comprises a step of filling and pre-embedding;
before and/or after the edge banding, the method further comprises a step of machining processing; and
before the aramid paper honeycomb composite part is obtained, the method further comprises a post-treatment step.
Preferably, the a step of filling and pre-embedding is specifically performed by:
in the position where machining or manual processing is needed in the later stage, filling and pre-embedding the Honeycon bonding glue;
the step of machining processing is specifically performed by:
after performing one or more steps of size positioning, edge trimming, hole opening and grooving on the filling and pre-embedding position of the part, installing hardware or installing hardware with combined use of a Honeycon bonding glue; and
the post-treatment step includes one or more of spray painting, film sticking and fireproof board sticking.

The present disclosure further provides use of the aramid paper honeycomb composite part described in any one of the above technical solutions or the aramid paper honeycomb composite part prepared by using the method described in any one of the above technical solutions in rail transit lightweight or lightweight flame-retardant panel furniture.

The present disclosure provides an aramid 1313 reticular fiber, wherein the aramid 1313 fiber is a flocculent fiber cluster aramid 1313 fiber; and aramid 1313 fiber filaments are interwoven to form a three-dimensional reticular structure. Compared with the prior art, the present disclosure addresses the drawbacks of the existing thermosetting adhesives that they often need heating during their bonding and curing, which is very inconvenience to their application and has limited their widespread. Moreover, the following problems are addressed: in the existing process of producing aramid honeycomb composite parts, high energy consumption and high equipment cost, low production efficiency, and requirement for high temperature hot press, difficulty to achieve large-scale and low-cost production in the technological process, resulting in expensive products, and especially in limitation of customized processing.

According to the present disclosure, an aramid 1313 reticular fiber is creatively obtained, which has a flocculent fiber cluster-like morphology, and aramid 1313 fiber filaments are interwoven to form a three-dimensional reticular structure. Moreover, in the present disclosure, this fiber is used in an epoxy resin glue to obtain an aramid epoxy resin glue. Adding the aramid 1313 reticular fiber to the epoxy resin glue, similar to the principle of adding steel reinforcement in the cement, allows the epoxy resin glue to possess better bonding properties after being cured, such as better compression resistance, shear resistance, crack resistance, and low temperature resistance. This aramid epoxy resin glue is a series of flame-retardant epoxy resin structural glues, which not only has good bonding properties, but also is applicable to edge banding and molding by adjusting its components and physical parameters, thereby satisfying multiple requirements. The aramid epoxy resin glue can be cured at room temperature and meanwhile possesses good performances, which is able to reach the related standards of aramid paper honeycomb composite parts, thereby avoiding the deficiency, such as the cumbersome process and high production cost, of the current preparation of aramid honeycomb composite parts.

Furthermore, according to the present disclosure, a process for an aramid paper honeycomb composite part and a method for preparing the part at room temperature are designed. In the present disclosure, by using the above-mentioned aramid epoxy resin glue, an aramid paper honeycomb core is bonded between prepreg cured sheets to form a sandwich structure, to obtain an aramid paper honeycomb composite part. The aramid paper honeycomb composite part provided by the present disclosure adopts pre-prepared the prepreg cured sheet in combination with the aramid epoxy resin glue, which enables it to be compounded at room temperature in the final compounding process, reducing production time and equipment investment, eliminating the need for large-scale equipment such as hot presses, large vacuum tanks, and high-temperature ovens during the processing of finished parts, thereby reducing production costs and realizing the industrial production of large quantities of aramid paper honeycomb composite panels. In addition, the prepared aramid paper honeycomb composite part effectively maintains the rigidity, flatness and strength of the aramid paper honeycomb core, and has good flame retardancy, heat preservation and mechanical properties. The method for preparing the aramid 1313 reticular fiber provided by the present disclosure has simple processes and mild conditions, and is more suitable for large-scale production and promotion.

The experimental results have shown that for the aramid epoxy resin glue provided by the present disclosure, the fully cured glue has a Shore hardness of 85-95 D, and the cured glue block has a compressive strength greater than or equal to 55-65 MPa; and that it has a pulling force greater than or equal to 2000 N as using M6 screw in 10 mm deep, a shear strength (as kept at 60°C for 3 days and at normal temperature of 25°C for 7 days) greater than or equal to 10-15 MPa, and good low temperature performances, i.e., a low temperature down to -55°C. Moreover, the prepared aramid paper honeycomb composite part also has good overall performances, a tensile performance of 1.70-2.40 MPa, a flat compression performance of 2.0-3.6 MPa, a shear performance of 0.60-1.30 MPa, a climbing drum peel strength of 45-70 N×mm/mm, and a bending stiffness of 6.0×10⁷-11.0×10⁷ N·mm².

### BRIEF DESCRIPTION OF DRAWINGS

FIG. 1 is an appearance view of the aramid 1313 reticular fiber prepared according to the present disclosure; and
FIG. 2 is a scanning electron micrograph of the aramid 1313 reticular fiber prepared according to the present disclosure.

### DETAILED DESCRIPTION

For further understanding of the present disclosure, preferred embodiments of the present disclosure will be described below in conjunction with examples. However, it should be understood that these descriptions are only for further illustrating the features and advantages the present invention, rather than limiting the claims of the present invention.

For all raw materials used in the present disclosure, there is no particular limit on their source, and they can be purchased on the market or prepared using conventional methods well known to these skilled in the art.

For all raw materials used in the present disclosure, there is no particular limit on their purity. In the present disclosure, it is preferred that they have analytical grade or conventional purity required in the field of aramid epoxy resin glue preparation.

For all raw materials of the present invention, they are given with the conventional brand names and abbreviations in this field, each of which is clearly and definite in their related application field. Based on their brand names, abbreviations and the related applications, a skilled person in the art can obtain them by purchasing from the market or preparing using conventional methods.

The present disclosure provides an aramid 1313 reticular fiber, wherein the aramid 1313 fiber is a flocculent fiber cluster aramid 1313 fiber; and
aramid 1313 fiber filaments are interwoven to form a three-dimensional reticular structure.

In the present disclosure, there is no special restriction on the definition of aramid 1313. The definition and concept of aramid 1313 can be those well known to those skilled in the art. A skilled person in the art may select or adjust it based on actual production conditions, product requirements and quality requirements. It may be a kind of polyamide fiber, called as poly(m-phenylene isophthalamide) fiber.

The aramid 1313 reticular fiber described in the present disclosure has a macro morphology of a flocculent fiber cluster or a cotton-like fiber cluster, and the aramid 1313 fiber filaments are interwoven to form a three-dimensional (3D) reticular structure.

In the present disclosure, theoretically there is no particular limit on the characteristic parameters of the aramid 1313 reticular fiber. A skilled person in the art may select or adjust them based on actual production conditions, product requirements and quality requirements. In the present disclosure, in order to ensure the performance of the aramid 1313 reticular fiber, to better improve the performance of the aramid epoxy resin glue, and to meet the processing requirements and quality requirements of aramid paper honeycomb composite parts, the aramid 1313 reticular fiber preferably has a fineness of 1-2 D, more preferably 1.2-1.8 D, and furthermore preferably 1.4-1.6 D.

In the present disclosure, theoretically there is no particular limit on the microstructure of the aramid 1313 reticular fiber. A skilled person in the art may select or adjust it based on actual production conditions, product requirements and quality requirements. In the present disclosure, in order to ensure the performance of the aramid 1313 reticular fiber, to better improve the performance of the aramid epoxy resin glue, and to meet the processing requirements and quality requirements of aramid paper honeycomb composite parts, microscopically, it is particularly preferred that the aramid 1313 reticular fiber has a microscopic three-dimensional reticular structure formed by mutual cross-linking of filaments, strips and films. In the present disclosure, the filaments, strips and films are all composed of aramid 1313. The aramid 1313 filaments shaped as thin filament. The aramid 1313 strips may be formed from the crispation of the aramid 1313 film, or formed from the intertwinement of the aramid 1313 filaments. The aramid 1313 film has the typical two-dimensional characteristics of a film, with a larger sheet diameter and a thinner thickness.

In the present disclosure, theoretically there is no particular limit on the microstructure parameters of the aramid 1313 reticular fiber. A skilled person in the art may select or adjust them based on actual production conditions, product requirements and quality requirements. In the present disclosure, in order to ensure the performance of the aramid 1313 reticular fiber, to better improve the performance of the aramid epoxy resin glue, and to meet the processing requirements and quality requirements of aramid paper honeycomb composite parts, the filaments preferably have a diameter of 10-500 nm, more preferably 50-400 nm, furthermore preferably 100-300 nm, and yet furthermore preferably 150-200 nm. The strips preferably have a diameter of 0.5-20 µm, more preferably 3-18 µm, furthermore preferably 5-15 µm, and yet furthermore preferably 8-12 µm. The films preferably have a diameter of 5-50 µm, more preferably 15-40 µm, and furthermore preferably 25-30 µm.

The present disclosure further provides a method for preparing an aramid 1313 reticular fiber, comprising the following steps:
1) spraying a polymerized aramid 1313 slurry into a coagulating liquid, and performing coagulation and precipitation under stirring to obtain a wet fiber cluster; and
2) subj ecting the wet fiber cluster obtained from the above step to hot air drying, to obtain a fluffy aramid 1313 reticular fiber.

In the present disclosure, the parameters, the selection and structure, as well as the corresponding optimization principle for the above-mentioned preparation method are correspond to that of the aforementioned aramid 1313 reticular fiber, and thus they will not be repeated one by one herein.

According to the present disclosure, firstly, a polymerized aramid 1313 slurry is sprayed into a coagulating liquid, and subjected to coagulation and precipitation under stirring to obtain a wet fiber cluster.

In the present disclosure, there is no particular limit on the polymerization method and process. The aramid 1313 can be prepared by conventional polymerization method and process well known to these skilled in the art. A skilled person in the art may select or adjust them based on actual production conditions, product requirements and quality requirements.

In the present disclosure, theoretically there is no particular limit on manners and parameters of spraying the aramid 1313 slurry. A skilled person in the art may select or adjust them based on actual production conditions, product requirements and quality requirements. In the present disclosure, in order to ensure the performance of the aramid 1313 reticular fiber, to better improve the performance of the aramid epoxy resin glue, and to meet the processing requirements and quality requirements of aramid paper honeycomb composite parts, the spraying manner is preferably spraying high-pressure spray formed through platinum nozzles. In the present disclosure, the aramid 1313 slurry is sprayed at a flow rate preferably less than or equal to 1000 mL/min, more preferably less than or equal to 800 mL/min, and furthermore preferably less than or equal to 500 mL/min, maybe 1-1000 mL/min, further maybe 300-800 mL/min, and yet maybe 500-600 mL/min.

In the present disclosure, theoretically there is no particular limit on the selection of the coagulating liquid. A skilled person in the art may select or adjust it based on actual production conditions, product requirements and quality requirements. In the present disclosure, in order to ensure the performance of the aramid 1313 reticular fiber, to better improve the performance of the aramid epoxy resin glue, and to meet the processing requirements and quality requirements of aramid paper honeycomb composite parts, the coagulating liquid, that is a precipitating agent, preferably includes dimethylacetylamide (DMAc) solution, more preferably dimethylacetylamide solution with a mass content of 45%-55% (the mass content may also be 47%-53%, or 49%-51%). In the present disclosure, the dimethylacetylamide solution may specifically contain 45%-55% of dimethylacetylamide, 0-1% of a polar solvent (i.e., lithium chloride) and 44%-54% of water. The polar solvent therein may also be 0.2%-0.8%, or 0.4%-0.6%. The water therein may also be 46%-52%, or 48%-50%.

In the present disclosure, theoretically there is no particular limit on the use amount of the coagulating liquid. A skilled person in the art may select or adjust it based on actual production conditions, product requirements and quality requirements. In the present disclosure, in order to ensure the performance of the aramid 1313 reticular fiber, to better improve the performance of the aramid epoxy resin glue, and to meet the processing requirements and quality requirements of aramid paper honeycomb composite parts, the mass ration of the aramid 1313 slurry to the coagulating liquid preferably is 1: (2-20), more preferably 1: (5-18), further more preferably 1: (7-15), and yet furthermore preferably 1: (10-13).

In the present disclosure, theoretically there is no particular limit on the state of coagulation and precipitation. A skilled person in the art may select or adjust it based on actual production conditions, product requirements and quality requirements. In the present disclosure, in order to ensure the performance of the aramid 1313 reticular fiber, to better improve the performance of the aramid epoxy resin glue, and to meet the processing requirements and quality requirements of aramid paper honeycomb composite parts, the coagulation and precipitation, that is, precipitation, refer to a state that the aramid slurry has precipitated into fiber filaments after coagulating, and preferably to a state that the aramid 1313 slurry has coagulated into an aramid 1313 fiber shape after spraying filaments.

In the present disclosure, theoretically there is no particular limit on specific parameters of the coagulation and precipitation. A skilled person in the art may select or adjust them based on actual production conditions, product requirements and quality requirements. In the present disclosure, in order to ensure the performance of the aramid 1313 reticular fiber, to better improve the performance of the aramid epoxy resin glue, and to meet the processing requirements and quality requirements of aramid paper honeycomb composite parts, the time of the coagulation and precipitation, that is, the stirring time or the time in the coagulating liquid, is preferably 5-40 min, more preferably 10-35 min, furthermore preferably 15-30 min, and yet furthermore preferably 20-25 min.

According to the present disclosure, subsequently the wet fiber cluster obtained from the above step is subjected to hot air drying, to obtain a fluffy aramid 1313 reticular fiber.

In the present disclosure, theoretically there is no particular limit on specific parameters of the hot air drying. A skilled person in the art may select or adjust it based on actual production conditions, product requirements and quality requirements. In the present disclosure, in order to ensure the performance of the aramid 1313 reticular fiber, to better improve the performance of the aramid epoxy resin glue, and to meet the processing requirements and quality requirements of aramid paper honeycomb composite parts, the temperature of the hot air drying preferably is 60-85°C, more preferably 65-80°C, and furthermore preferably 70-75°C.

According to the present disclosure, after the above steps, the aramid slurry after the polymerization reaction is sprayed as high-pressure spray into a coagulation bath through a platinum nozzle; under the condition of stirring, it forms wet flocculent fiber clusters upon the stirring device or a rod medium; and the obtained wet fiber clusters are then dried and fluffed through a large-scale hot-air drying equipment, to obtain an aramid 1313 reticular fiber with a three-dimensional reticular structure formed from interwoven fiber filaments.

The present disclosure further provides an aramid epoxy resin glue. Based on mass percentage of raw materials, the glue comprises:
90-94 parts by weight of an epoxy resin;
3.5-7.5 parts by weight of silicon dioxide;
0-10 parts by weight of a foamed filler; and
0.3-0.5 parts by weight of an aramid 1313 reticular fiber.

In the present disclosure, theoretically there is no particular limit on specific selection of the epoxy resin. A skilled person in the art may select or adjust it based on actual production conditions, product requirements and quality requirements. In the present disclosure, in order to ensure the performance of the aramid epoxy resin glue, and to meet the processing requirements and quality requirements of aramid paper honeycomb composite parts, the epoxy resin preferably includes a flame-retardant epoxy resin.

In the present disclosure, theoretically there is no particular limit on the amount of the added epoxy resin. A skilled person in the art may select or adjust it based on actual production conditions, product requirements and quality requirements. In the present disclosure, in order to ensure the performance of the aramid epoxy resin glue, and to meet the processing requirements and quality requirements of aramid paper honeycomb composite parts, the epoxy resin is added preferably in an amount of 90-94 parts by weight, more preferably 90.5-93.5 parts by weight, furthermore preferably 91-93 parts by weight, and yet further more preferably 91.5-92.5 parts by weight.

In the present disclosure, theoretically there is no particular limit on specific selection of the silicon dioxide. A skilled person in the art may select or adjust it based on actual production conditions, product requirements and quality requirements. In the present disclosure, in order to ensure the performance of the aramid epoxy resin glue, and to meet the processing requirements and quality requirements of aramid paper honeycomb composite parts, the silicon dioxide preferably includes fumed silica powders. The silicon dioxide preferably has a particle size of 12 nm-6 µm, more preferably 50 nm-1µm, furthermore preferably 100-800 nm, yet furthermore preferably 150-600 nm, and most preferably 200-400 nm.

In the present disclosure, theoretically there is no particular limit on the amount of the added silicon dioxide. A skilled person in the art may select or adjust it based on actual production conditions, product requirements and quality requirements. In the present disclosure, in order to ensure the performance of the aramid epoxy resin glue, and to meet the processing requirements and quality requirements of aramid paper honeycomb composite parts, the silicon dioxide is added preferably in an amount of 3.5-7.5 parts by weight, more preferably 4-7 parts by weight, furthermore preferably 4.5-6.5 parts by weight, and yet furthermore preferably 5-6 parts by weight.

In the present disclosure, theoretically there is no particular limit on specific selection of the foamed filler. A skilled person in the art may select or adjust it based on actual production conditions, product requirements and quality requirements. In the present disclosure, in order to ensure the performance of the aramid epoxy resin glue, and to meet the processing requirements and quality requirements of aramid paper honeycomb composite parts, the foamed filler preferably includes hollow glass microspheres, and more preferably hollow glass microspheres with a single density or hollow glass microspheres with different densities. In the present disclosure, the foamed filler is preferably used to adjust the density of the aramid epoxy resin glue.

In the present disclosure, theoretically there is no particular limit on the amount of the added foamed filler. A skilled person in the art may select or adjust it based on actual production conditions, product requirements and quality requirements. In the present disclosure, in order to ensure the performance of the aramid epoxy resin glue, and to meet the processing requirements and quality requirements of aramid paper honeycomb composite parts, the foamed filler is added preferably in an amount of 0-10 parts by weight, more preferably 2-8 parts by weight, and furthermore preferably 4-6 parts by weight.

In the present disclosure, theoretically there is no particular limit on specific parameters of the aramid 1313 reticular fiber. A skilled person in the art may select or adjust them based on actual production conditions, product requirements and quality requirements. In the present disclosure, in order to ensure the performance of the aramid epoxy resin glue, and to meet the processing requirements and quality requirements of aramid paper honeycomb composite parts, the aramid 1313 reticular fiber preferably has a length of 1-7 mm, more preferably 2-6 mm, and furthermore preferably 3-5 mm. The aramid 1313 reticular fiber preferably has an aspect ratio of (50-1000): 1, more preferably (250-800): 1, and furthermore preferably (450-600): 1.

In the present disclosure, theoretically there is no particular limit on the amount of the added aramid 1313 reticular fiber. A skilled person in the art may select or adjust it based on actual production conditions, product requirements and quality requirements. In the present disclosure, in order to ensure the performance of the aramid epoxy resin glue, and to meet the processing requirements and quality requirements of aramid paper honeycomb composite parts, the aramid 1313 reticular fiber is added preferably in an amount of 0.3-0.5 parts by weight, more preferably 0.32-0.48 parts by weight, furthermore preferably 0.35-0.45 parts by weight, and yet furthermore preferably 0.38-0.42 parts by weight.

In the present disclosure, in order to complete and detail the technical solutions, to ensure the performance of the aramid epoxy resin glue, and not only to meet the processing requirements and quality requirements of aramid paper honeycomb composite parts, but also to further meet the various needs of composite parts, the type of the aramid epoxy resin glue preferably includes one or more of aramid epoxy resin edge-sealing glues, an aramid epoxy resin filling glues and aramid epoxy resin molding glues, and more preferably includes aramid epoxy resin edge-sealing glues, aramid epoxy resin filling glues and aramid epoxy resin molding glues.

In the present disclosure, theoretically there is no particular limit on the composition of the aramid epoxy resin edge-sealing glue. A skilled person in the art may select or adjust it based on actual production conditions, product requirements and quality requirements. In the present disclosure, in order to ensure the performance of the aramid epoxy resin glue, and to meet the various processing requirements and high quality requirements of composite parts, in the aramid epoxy resin edge-sealing glue, based on mass percentage of raw materials, the silicon dioxide is added preferably in an amount of 3.5-5.7 parts by weight, more preferably 3.8-5.5 parts by weight, furthermore preferably 4.0-5.3 parts by weight, and yet furthermore preferably 4.2-5.0 parts by weight.

In the present disclosure, it is preferred to control the density of the aramid epoxy resin edge-sealing glue. The aramid epoxy resin edge-sealing glue preferably has a density of 0.6-1.0 g/cm³, more preferably 0.65-0.95 g/cm³, furthermore preferably 0.7-0.9 g/cm³, and yet furthermore preferably 0.75-0.85 g/cm³. In the present disclosure, the aramid epoxy resin edge-sealing glue is preferably used for edge banding of lightweight honeycomb composite materials.

In the present disclosure, theoretically there is no particular limit on the composition of the aramid epoxy resin filling glue. A skilled person in the art may select or adjust it based on actual production conditions, product requirements and quality requirements. In the present disclosure, in order to ensure the performance of the aramid epoxy resin glue, and to meet the various processing requirements and high quality requirements of composite parts, in the aramid epoxy resin edge-sealing glue, based on mass percentage of raw materials, the silicon dioxide is added preferably in an amount of 3.5-5.7 parts by weight, more preferably 3.8-5.5 parts by weight, furthermore preferably 4.0-5.3 parts by weight, and yet furthermore preferably 4.2-5.0 parts by weight.

In the present disclosure, it is preferred to control the density of the aramid epoxy resin filling glue. The aramid epoxy resin filling glue preferably has a density of 1.4-1.6 g/cm³, more preferably 1.42-1.58 g/cm³, furthermore preferably 1.45-1.55 g/cm³, and yet furthermore preferably 1.48-1.53 g/cm³. In the present disclosure, the aramid epoxy resin filling glue is preferably used for bonding hardware on resin composite materials.

In the present disclosure, theoretically there is no particular limit on the composition of the aramid epoxy resin molding glue. A skilled person in the art may select or adjust it based on actual production conditions, product requirements and quality requirements. In the present disclosure, in order to ensure the performance of the aramid epoxy resin glue, and to meet the various processing requirements and high quality requirements of composite parts, it is preferred to control the amount of the silicon dioxide added into the aramid epoxy resin molding glue. Based on mass percentage of raw materials, the silicon dioxide is added preferably in an amount of 5.7-7.5 parts by weight, more preferably 6.0-7.3 parts by weight, furthermore preferably 6.2-7.0 parts by weight, and yet furthermore preferably 6.4-6.8 parts by weight.

In the present disclosure, the aramid epoxy resin filling glue preferably has a density of 0.9-1.6 g/cm³, more preferably 1.0 -1.5 g/cm³, furthermore preferably 1.1-1.4 g/cm³, and yet furthermore preferably 1.2-1.3 g/cm³. In the present disclosure, the aramid epoxy resin molding glue preferably has a dough-like morphology before being cured, and the aramid epoxy resin molding glue is preferably used for modeling on resin composite materials.

The present disclosure further provides a method for preparing aramid epoxy resin glue described in any one of the above technical solutions, comprising the following step:

a) mixing an aramid 1313 reticular fiber, an epoxy resin and silicon dioxide, to obtain an aramid epoxy resin glue.

In the method for preparing the aramid epoxy resin glue of the present disclosure, the specific preferred embodiments and the preferred values of the added parts of the raw materials are same with the specific preferred embodiments of the components and the preferred values of the added parts in the aforementioned aramid epoxy resin glues, thus they will not be repeated one by one herein.

In the present disclosure, in order to complete and detail the technical solutions, to ensure the performance of the aramid epoxy resin glue, and not only to meet the processing requirements and quality requirements of aramid paper honeycomb composite parts, but also to further meet the various needs of composite parts, it is preferred to further include a foamed filler in step a), that is, the raw material preferably is an aramid 1313 reticular fiber, an epoxy resin, a foamed filler and silicon dioxide. Specifically, step a) may specifically be performed by:

mixing an aramid 1313 reticular fiber, epoxy resin, a foamed filler and silicon dioxide, to obtain an aramid epoxy resin glue.

In the present disclosure, theoretically there is no particular limit on the mixing specific parameters. A skilled person in the art may select or adjust them based on actual production conditions, product requirements and quality requirements. In the present disclosure, in order to ensure the performance of the aramid epoxy resin glue, and to meet the processing requirements and quality requirements of aramid paper honeycomb composite parts, the mixing time preferably is 10-30 min, more preferably 12-28 min, further more preferably 15-25 min, and yet further more preferably 18-22 min.

In the present disclosure, in order to complete and detail the technical solutions, to ensure the performance of the aramid epoxy resin glue, and not only to meet the processing requirements and quality requirements of aramid paper honeycomb composite parts, but also to further meet the various needs of composite parts, the aramid epoxy resin glue is added with a curing aid before use. In the present disclosure, theoretically there is no particular limit on specific selection and proportion of the curing aid. A skilled person in the art may select or adjust them based on actual production conditions, product requirements and quality requirements. In the present disclosure, in order to ensure the performance of the aramid epoxy resin glue, and to meet the processing requirements and quality requirements of aramid paper honeycomb composite parts, the curing aid preferably includes a modified amine curing agent, an accelerating agent and a coupling agent. The aramid epoxy resin glue and the curing aid are preferably present in a mass ratio of 4: 1.

In the present disclosure, in order to complete and detail the technical solutions, to ensure the performance of the aramid epoxy resin glue, and to meet the processing requirements and quality requirements of aramid paper honeycomb composite parts so that it is conducive to the actual use, the aramid epoxy resin glue preferably has an opening time of 30-40 min, more preferably 32-38 min, and furthermore preferably 34-36 min. The open time, that is, the time of mixing and glue application of aramid epoxy resin glue A and B components, includes the time of mixing and glue application. In the present disclosure, after the open time, the glue begins to thicken and harden gradually.

The present disclosure further provides an aramid paper honeycomb composite part, comprising prepreg cured sheets, an aramid paper honeycomb core and a Honeycon glue; wherein
the aramid paper honeycomb core is compounded between the prepreg cured sheets, forming a sandwich structure;
the Honeycon glue includes a Honeycon bonding glue;
the Honeycon bonding glue is bonded between the aramid paper honeycomb core and the prepreg cured sheets; and
the Honeycon glue is the aramid epoxy resin glue described in any one of the above technical solutions or the aramid epoxy resin glue prepared using the method described in any one of the above technical solutions.

In the present disclosure, theoretically there is no particular limit on definition of the prepreg cured sheets, which can be defined as the prepreg cured sheets well known to these skilled in art. A skilled person in the art may select or adjust them based on actual production conditions, product requirements and quality requirements. In the present disclosure, in order to ensure the performance of the aramid paper honeycomb composite part, to meet its processing requirements, and to favor for its mass production, the prepreg cured sheet preferably refers to the sheet materials obtained after curing the prepreg under heat and pressure, and preferably to prepreg resin cured sheets.

In the present disclosure, theoretically there is no particular limit on selection of the prepreg cured sheets. A skilled person in the art may select or adjust it based on actual production conditions, product requirements and quality requirements. In the present disclosure, in order to ensure the performance of the aramid paper honeycomb composite part, to meet its processing requirements, and to favor for its mass production, the prepreg cured sheet preferably includes glass fiber and/or carbon fiber prepreg cured sheets, and more preferably glass fiber or carbon fiber prepreg cured sheets, that is, glass fiber resin prepreg cured sheets or carbon fiber resin prepreg cured sheets.

In the present disclosure, theoretically there is no particular limit on the structure of the prepreg cured sheets. A skilled person in the art may select or adjust it based on actual production conditions, product requirements and quality requirements. In the present disclosure, in order to ensure the performance of the aramid paper honeycomb composite part, to meet its processing requirements, and to favor for its mass production, the prepreg cured sheet preferably includes a double-layer prepreg cured sheet and/or a multilayer prepreg cured sheet. Specifically, the double-layer prepreg cured sheet preferably has a thickness of 0.3-0.36 mm, more preferably 0.31-0.35 mm, and furthermore preferably 0.32-0.34 mm. The multilayer prepreg cured sheet preferably has a thickness greater than or equal to 0.45 mm, more preferably greater than or equal to 0.65 mm, and furthermore preferably greater than or equal to 0.85 mm.

In the present disclosure, theoretically there is no particular limit on parameters of the prepreg cured sheet. A skilled person in the art may select or adjust them based on actual production conditions, product requirements and quality requirements. In the present disclosure, in order to ensure the performance of the aramid paper honeycomb composite part, to meet its processing requirements, and to favor for its mass production, the prepreg cured sheet preferably contains a resin in an amount of 35%-65%, more preferably 40%-60%, and furthermore preferably 45%-55%. The prepreg cured sheet preferably contains volatile constituents in an amount less than or equal to 8%, more preferably less than or equal to 6%, and further more preferably less than or equal to 4%.

In the present disclosure, there is no particular limit on the aramid paper honeycomb core, which can be the honeycomb core prepared by aramid paper well known to these skilled in the art. A skilled person in the art may select or adjust it based on actual production conditions, product requirements and quality requirements. In the present disclosure, the aramid honeycomb core is preferably made of aramid paper. The honeycomb core preferably is one or more of a regular hexagonal honeycomb core, a polygonal honeycomb core, a corrugated honeycomb core and an overstretched honeycomb core; more preferably a regular hexagonal honeycomb core, a polygonal honeycomb core, a corrugated honeycomb core or an overstretched honeycomb core; and further more preferably a regular hexagonal honeycomb core.

In the present disclosure, theoretically there is no particular limit on parameters of the aramid paper honeycomb core. A skilled person in the art may select or adjust them based on actual production conditions, product requirements and quality requirements. In the present disclosure, in order to ensure the performance of the aramid paper honeycomb composite part, to meet its processing requirements, and to favor for its mass production, the aramid paper honeycomb core preferably has a cell size of 1.83-3.67 mm, more preferably 2.03-3.37 mm, furthermore preferably 2.33-3.17 mm, and yet furthermore preferably 2.63-3.17 mm. The aramid paper honeycomb core preferably has a height of 1-860 mm, more preferably 50-600 mm, furthermore preferably 100-500 mm, and yet furthermore preferably 200-400 mm. The aramid paper honeycomb core preferably has a density of 32-120 kg/m³, more preferably 40-110 kg/m³, furthermore preferably 50-100 kg/m³, yet furthermore preferably 60-90 kg/m³, and most preferably 70-80 kg/m³.

In the present disclosure, theoretically there is no particular limit on the Honeycon glue. It can be the Honeycon glue well known to these skilled in the art, or self-prepared or commercially purchased one. A skilled person in the art may select or adjust it based on actual production conditions, product requirements and quality requirements. In the present disclosure, in order to ensure the performance of the aramid paper honeycomb composite part, to meet its processing requirements, and to favor for its mass production, the Honeycon glue preferably includes the Honeycon bonding glue, that is, an aramid epoxy resin filling glue. The Honeycon bonding glue may specifically be Honeycon CP2016 glue.

In the present disclosure, the aramid paper honeycomb core is compounded between the prepreg cured sheets, that is, both the upper and lower surfaces of the aramid paper honeycomb core are compounded with a prepreg cured sheet, to form a sandwich-like sandwich structure. In the present disclosure, theoretically there is no particular limit on compounding manners. A skilled person in the art may select or adjust them based on actual production conditions, product requirements and quality requirements. In the present disclosure, in order to ensure the performance of the aramid paper honeycomb composite part, to meet its processing requirements, and to favor for its mass production, the compounding is preferably adhesive bonding. That is, the Honeycon bonding glue is bonded between the aramid paper honeycomb core and the prepreg cured sheets.

In the present disclosure, theoretically there is no particular limit on selection of the Honeycon glue. A skilled person in the art may select or adjust it based on actual production conditions, product requirements and quality requirements. In the present disclosure, in order to ensure the performance of the aramid paper honeycomb composite part, to meet its processing requirements, and to favor for its mass production, the Honeycon glue preferably further includes the Honeycon edge-sealing glue, that is, an aramid epoxy resin edge-sealing glue. The Honeycon edge-sealing glue may specifically be Honeycon CP2015 glue.

In the present disclosure, the Honeycon edge-sealing glue is used as edge banding of the aramid paper honeycomb composite part, that is, the Honeycon edge-sealing glue is provided around the sandwich structure, to form an edge banding. In the present disclosure, theoretically there is no particular limit on the use amount of the Honeycon edge-sealing glue. A skilled person in the art may select or adjust it based on actual production conditions, product requirements and quality requirements. In the present disclosure, in order to ensure the performance of the aramid paper honeycomb composite part, to meet its processing requirements, and to favor for its mass production, the edge banding of the Honeycon edge-sealing glue preferably has a thickness of 1-8 mm, more preferably 2-6 mm, furthermore preferably 3-4 mm, and yet furthermore preferably 3.3-3.6 mm.

In the present disclosure, in order to ensure the performance of the aramid paper honeycomb composite part, to meet its processing requirements, and to favor for its mass production, and further for the convenience of subsequent processing or customization, the Honeycon glue may preferably be filled and pre-embedded at any position of the aramid paper honeycomb composite part. The Honeycon glue filled and pre-embedded at the any position of the aramid paper honeycomb composite part is preferably a Honeycon bonding glue or a Honeycon filling and molding glue, and more preferably a Honeycon filling and molding glue.

In the present disclosure, theoretically there is no particular limit on the Honeycon glue. It can be the Honeycon glue well known to these skilled in the art, or self-prepared or commercially purchased one. A skilled person in the art may select or adjust it based on actual production conditions, product requirements and quality requirements. In the present disclosure, in order to ensure the performance of the aramid paper honeycomb composite part, to meet its processing requirements, and to favor for its mass production, the Honeycon glue preferably includes the Honeycon filling and molding glue, that is the aramid epoxy resin molding glue. The Honeycon filling and molding glue may specifically be Honeycon CP2017 glue.

In the present disclosure, the any position preferably includes the position where machining or manual processing is needed in the later stage. That is, if subsequently machining or manual processing is needed to be performed on the aramid paper honeycomb composite part, the Honeycon bonding glue or the molding glue may be filled and pre-embedded according to the process drawings in the position where machining or manual processing is needed. In the present disclosure, the processing manner preferably includes one or more of size positioning, edge trimming, hole opening and grooving, and more preferably a plurality of size positioning, edge trimming, hole opening and grooving.

In the present disclosure, in order to complete and detail the structure of the aramid paper honeycomb composite part, to meet various needs including the processing requirements, and to favor for mass production, the aramid paper honeycomb composite part preferably further includes hardware. In the present disclosure, theoretically there is no particular limit on the way of setting the hardware. A skilled person in the art may select or adjust it based on actual production conditions, product requirements and quality requirements. In the present disclosure, in order to ensure the performance of the aramid paper honeycomb composite part, to meet its processing requirements, and to favor for its mass production, the hardware is preferably arranged at the position where the Honeycon glue (a Honeycon bonding glue or a Honeycon filling and molding glue is specifically preferred) has been filled and pre-embedded.

Further, the hardware can preferably also be used in combination with the Honeycon glue when it is arranged. In the present disclosure, specifically, the Honeycon glue used in combination is preferably a Honeycon bonding glue or a Honeycon filling and molding glue. When the aramid paper honeycomb composite part is subjected to machining or manual processing, such as size positioning, edge trimming, hole opening, and grooving, according to the requirements of the drawings, the Honeycon glue may be used to fill the mold and embed the hardware, so that the Honeycon glue and hardware are used in combination, to finally obtain an aramid paper honeycomb composite part with the edge banding of Honeycon edge-sealing glue.

The present disclosure further provides a method for preparing an aramid paper honeycomb composite part comprising the following step:

A) bonding an aramid paper honeycomb as a core material and a prepreg cured sheet as a surface material by using a Honeycon bonding glue, performing mold closing and curing under pressure, and then performing edge banding by using a Honeycon edge-sealing glue, to obtain an aramid paper honeycomb composite part.

In the present disclosure, the parameters, selection and structural relationship, as well as the corresponding optimization principle of the materials needed in the above-mentioned aramid paper honeycomb composite part correspond to that in the aforementioned aramid paper honeycomb composite part, thus they will not be repeated one by one herein.

In the present disclosure, theoretically there is no particular limit on source of the prepreg cured sheet. A skilled person in the art may select or adjust it based on actual production conditions, product requirements and quality requirements. In the present disclosure, in order to ensure the performance of the aramid paper honeycomb composite part, to meet its processing requirements, and to favor for its mass production, the prepreg cured sheet is particularly preferred to be obtained by curing a glass fiber and/or carbon fiber prepreg under heat and pressure. The steps may specifically be:
putting two (or more) layers of glass fiber or carbon fiber prepreg into a hot press, and performing curing treatment, to form a prepreg cured sheet.

The steps may more specifically be:
cleaning the mold with a solvent and checking its flatness, coating a mold release agent on the contact surface of the prepreg and the mold, laying two (or more) layers of prepregs into the mold evenly, closing the mold and putting it into a hot press; and firstly performing a first heating and heat preservation under a first pressure, then performing a second heating and heat preservation under a second pressure, and at last performing a third heating and heat preservation under a third pressure, and taking out the prepared prepreg-cured sheet from the mold after cooling.

In the present disclosure, there is no particular limit on the process parameters in the above-mentioned step. A skilled person in the art may select or adjust them based on actual production conditions, product requirements and quality requirements. In the present disclosure, the process parameters in the above-mentioned step can be selected and adjusted according to the material and layer numbers of the prepreg, as well as product requirements.

In the present disclosure, theoretically there is no particular limit on parameters of the curing under heat and pressure. A skilled person in the art may select or adjust them based on actual production conditions, product requirements and quality requirements. In the present disclosure, in order to ensure the performance of the aramid paper honeycomb composite part, to meet its processing requirements, and to favor for its mass production, the curing under heat and pressure is preferably performed at a temperature of 120-150°C, more preferably 125-145°C, and furthermore preferably 130-140°C. In the present disclosure, the curing under heat and pressure is preferably performed under a pressure of 0.1-0.3 MPa, more preferably 0.12-0.28 MPa, furthermore preferably 0.15-0.25 MPa, and yet furthermore preferably 0.18-0.22 MPa. In the present disclosure, the curing under heat and pressure is preferably performed for a duration of 25-330 minutes, more preferably 60-300 minute, furthermore preferably 120-240 minute, and yet furthermore preferably 150-210 minutes.

In the present disclosure, the prepreg cured sheet is separately prepared in advance, getting rid of multiple restrictions on the prepreg, such as refrigerated storage and short product shelf life. The prepreg can be cured in batches, so that the heat press is no longer occupied during the processing of finished parts, thereby reducing production costs and realizing mass production.

In the present disclosure, theoretically there is no particular limit on the adhesive bonding process. A skilled person in the art may select or adjust it based on actual production conditions, product requirements and quality requirements. In the present disclosure, in order to ensure the performance of the aramid paper honeycomb composite part, to meet its processing requirements, and to favor for its mass production, the adhesive bonding process is preferably made reference to adhesive bonding standard DIN6701.

In the present disclosure, in order to detail and complete the preparing process, to ensure the performance of the aramid paper honeycomb composite part, to meet its processing requirements, to favor for its mass production, and to particularly detail the above-mentioned adhesive bonding process, a pre-treatment step is preferably further included before the adhesive bonding. The pre-treatment preferably includes one or more of cutting, polishing, degreasing and dedusting, and more preferably cutting, polishing, degreasing and dedusting.

The above-mentioned adhesive bonding step may be specifically a step as follows:
cutting an aramid paper honeycomb sheet and a prepreg cured sheet, each of which needs to have a corresponding size margin; polishing both surfaces of the prepreg cured sheet (if there is a prepreg splicing seam, it should be polished to be flat) in accordance with the adhesive bonding standard DIN6701; and wiping with acetone or an alcohol solvent to degrease or dedust it.

The above-mentioned adhesive bonding step may be specifically a step as follows:
confirming the mixing ratio of Honeycon bonding mixed glues, accurately weighing A and B components, and fully stirring the mixed glues, in which after A and B components are mixed, a suitable working time is about 30 minutes, and once after this time, the glue will harden.

In the present disclosure, theoretically there is no particular limit on the adhesive bonding parameters. A skilled person in the art may select or adjust them based on actual production conditions, product requirements and quality requirements. In the present disclosure, in order to ensure the performance of the aramid paper honeycomb composite part, to meet its processing requirements, and to favor for its mass production, the amount of the Honeycon bonding glue used for the adhesive bonding is preferably 300-350 g/m², more preferably 310-340 g/m², and furthermore preferably 320-330 g/m².

In the present disclosure, theoretically there is no particular limit on parameters of the mold closing and curing under pressure. A skilled person in the art may select or adjust them based on actual production conditions, product requirements and quality requirements. In the present disclosure, in order to ensure the performance of the aramid paper honeycomb composite part, to meet its processing requirements, and to favor for its mass production, the pressure of the mold closing and curing under pressure is preferably 0.1-0.3 MPa, more preferably 0.12-0.28 MPa, furthermore preferably 0.15-0.25 MPa, and yet furthermore preferably 0.18-0.22 MPa. The temperature of the mold closing and curing under pressure is preferably 25-60°C, more preferably 30-55°C, furthermore preferably 35-50°C, and yet furthermore preferably 40-45°C. The time of the mold closing and curing under pressure includes two concepts, namely the initial curing time and/or and the full curing time. Among them, the initial curing time of the mold closing and curing under pressure is preferably 3-48 hours, more preferably 12-36 hours, and furthermore preferably 18-30 hours. The full curing time of the mold closing and curing under pressure is preferably 1-7 days, more preferably 2-6 days, and furthermore preferably 3-5 days. In the present disclosure, when the temperature of the mold closing and curing under pressure is room temperature of 25-35°C, the initial curing time of the mold closing and curing under pressure is preferably greater than or equal to 24 hours, more preferably greater than or equal to 36 hours, and furthermore preferably greater than or equal to 48 hours. When the temperature of the mold closing and curing under pressure is a high temperature of 50-60°C, the initial curing time of the mold closing and curing under pressure is preferably greater than or equal to 3 hours, more preferably greater than or equal to 5 hours, and furthermore preferably greater than or equal to 8 hours. Similarly, when the temperature of the mold closing and curing under pressure is a room temperature of 25-35°C, the full curing time the mold closing and curing under pressure is preferably greater than or equal to 7 days, more preferably greater than or equal to 9 days, and furthermore preferably greater than or equal to 12 days. When the temperature of the mold closing and curing under pressure is a high temperature of 50-60°C, the full curing time of the mold closing and curing under pressure is preferably greater than or equal to 1 day, more preferably greater than or equal to 2 days, and furthermore preferably greater than or equal to 3 days.

In the present disclosure, theoretically there is no particular limit on the use amount of the Honeycon edge-sealing glue. A skilled person in the art may select or adjust it based on actual production conditions, product requirements and quality requirements. In the present disclosure, in order to ensure the performance of the aramid paper honeycomb composite part, to meet its processing requirements, and to favor for its mass production, the use amount of the Honeycon edge-sealing glue is preferably correlated with the thickness of the edge banding of the composite part. The edge banding thickness of the Honeycon edge-sealing glue is preferably 1-8 mm, more preferably 2-6 mm, furthermore preferably 3-4 mm, and yet furthermore preferably 3.3-3.6 mm.

In the present disclosure, in order to detail and complete the preparing process, to ensure the performance of the aramid paper honeycomb composite part, to meet its processing requirements, and to favor for its mass production, a pre-treatment step is preferably further included after the adhesive bonding. The step of filling and pre-embedding is specifically preferred as follows:
in the position where machining or manual processing is needed in the later stage, filling and pre-embedding the Honeycon bonding glue;
and more specifically as follows:
in accordance with the process drawings, in the position where machining processing such as hole opening and grooving after compounding is needed, filling and pre-embedding the Honeycon bonding glue.

In the present disclosure, in order to detail and complete the preparing process, to ensure the performance of the aramid paper honeycomb composite part, to meet its processing requirements, and to favor for its mass production, a step of machining processing is preferably included before and/or after the edge banding. Specifically, the step of machining processing is preferably as follows:
after performing one or more steps of size positioning, edge trimming, hole opening and grooving on the filling and pre-embedding position of the part, installing hardware or installing hardware in combination with use of a Honeycon glue;
and more specifically as follows:
after demolding, post-processing the part, such as size positioning, edge trimming, hole opening, and grooving, and installing hardware or installing hardware in combination with use of a Honeycon bonding glue.

In the present disclosure, in order to detail and complete the preparing process, to ensure the performance of the aramid paper honeycomb composite part, to meet its processing requirements, and to favor for its mass production, a post-treatment step is preferably further included before the aramid paper honeycomb composite part is obtained. The post-treatment step preferably includes one or more of spray painting, film sticking and fireproof board sticking (preferably the thermosetting resin impregnated paper high pressure laminated plywood).

In the present disclosure, in order to detail and complete the preparing process, to ensure the performance of the aramid paper honeycomb composite part, to meet its processing requirements, and to favor for its mass production, the above-mentioned aramid paper honeycomb composite part may specifically prepared in the following steps:
step 1: putting two (or more) layers of glass fiber or carbon fiber prepreg into a hot press, and performing curing treatment, to form a prepreg cured sheet;
step 2: cutting an aramid paper honeycomb sheet and a prepreg cured sheet, each of which needs to have a corresponding size margin; polishing both surfaces of the prepreg cured sheet (if there is a prepreg splicing seam, it should be polished to be flat) in accordance with the adhesive bonding standard DIN6701; and wiping with acetone or an alcohol solvent to degrease or dedust it;
step 3: confirming the mixing ratio of Honeycon bonding mixed glues, accurately weighing A and B components, and fully stirring the mixed glues, in which after A and B components are mixed, a suitable working time is about 30 minutes, and once after this time, the glue will harden;
step 4: in accordance with the process drawings, in the position where machining processing such as hole opening and grooving after compounding is needed, filling and pre-embedding the Honeycon bonding glue;
step 5: applying each layer with a Honeycon bonding glue in an amount of 300-350 g/m², and after mold closing, applying a pressure of 0.1-0.2 MPa on flat parts, or a pressure of 0.2-0.3 MPa on arc parts, to cure under pressure (more than 24 hours at temperature above 25°C, or more than 3 hours at temperature about 60°C is needed to reach the initial curing);
step 6: after demolding, post-processing the part, such as size positioning, edge trimming, hole opening, and grooving, bonding by filling with a Honeycon bonding glue (if necessary), and edge banding with a Honeycon structural glue, to obtain an aramid paper honeycomb composite part; and
step 7: subjecting the aramid paper honeycomb composite part obtained in step 6 to painting, film sticking or and fireproof board sticking (thermosetting resin impregnated paper high pressure laminated plywood), to obtain a lightweight partition cabinet panel applicable to the interior decoration of Chinese standard electric multiple unit.

The present disclosure further provides use of the aramid paper honeycomb composite part described in any one of the above technical solutions or the aramid paper honeycomb composite part prepared using the method described in any one of the above technical solutions, in lightweight panel furniture.

In the present disclosure, theoretically there is no particular limit on specific selection of the lightweight panel furniture, which can be the panel furniture in a broad sense well known to these skilled in the art. A skilled person in the art can select and adjust it according to its use situation, environmental requirements and performance requirements. In the present disclosure, the lightweight panel furniture is preferably the lightweight panel furniture on a sports carrier, and may specifically be interiors, partitions, cabinets, and the like on high-speed rail train.

The present disclosure provides in the above-mentioned steps an aramid paper honeycomb, the method for preparing the same at room temperature, and use thereof. In the present disclosure, the Honeycon bonding glue is used to bond the aramid paper honeycomb core between prepreg cured sheets, so as to form a sandwich structure, and then the Honeycon edge-sealing glue is used to perform edge banding on the aramid paper honeycomb composite part, to obtain an aramid paper honeycomb composite part, which is a room temperature curable aramid paper honeycomb composite part. The aramid paper honeycomb composite part provided by the present disclosure adopts pre-prepared prepreg cured sheets in combination with the Honeycon glue, which enables it to be compounded at room temperature in the final compounding process, reducing production time and equipment investment, eliminating the need for large-scale equipment such as hot presses, large vacuum tanks, and high-temperature ovens during the processing of finished parts, thereby reducing production costs and realizing the industrial production of large quantities of aramid paper honeycomb composite panels. In addition, the further use of Honeycon glue for edge banding can directly produce sheet materials in batches, and the comprehensive use of Honeycon glue for adhesive bonding, edge banding and filling can produce various sheet materials in batches. At the same time, during customized processing and customer self-processing at the later stage, the Honeycon glue also can be used for edge banding and post-treatment, to obtain customized finished sheet materials, which is conducive to batch industrial production and has eliminated the limitations on customized processing. In addition, the prepreg cured sheet is separately prepared in advance, which also frees the prepreg from multiple restrictions, such as refrigerated storage and short product shelf life, and can cure the prepreg in batches.

Room temperature preparation method provided by the present disclosure has simple processes and mild conditions, and is more suitable for large-scale production and promotion. In addition, the prepared aramid paper honeycomb composite part effectively maintains the rigidity, flatness and strength of the aramid paper honeycomb core, and has good flame retardancy, heat preservation and mechanical properties.

The present disclosure provides in the above-mentioned steps an aramid 1313 reticular fiber and a method for preparing the same, a series of room temperature curable aramid flame-retardant epoxy resin structural glues and a method for preparing the same, and an aramid paper honeycomb composite part. The present disclosure adopts a specific aramid 1313 reticular fiber. The aramid 1313 fiber has a flocculent fiber cluster-like morphology and aramid 1313 fiber filaments are interwoven to form a three-dimensional reticular structure. Moreover, in the present disclosure, this fiber is used in an epoxy resin glue to obtain an aramid epoxy resin glue. Adding the aramid 1313 reticular fiber to the epoxy resin glue, similar to the principle of adding steel reinforcement in the cement, allows the epoxy resin glue to possess better bonding properties after being cured, such as better compression resistance, shear resistance, crack resistance, and low temperature resistance. This aramid epoxy resin glue is a series of flame-retardant epoxy resin structural glues, which not only has good bonding properties, but also is applicable to edge banding and molding by adjusting its components and physical parameters, thereby satisfying multiple requirements. The aramid epoxy resin glue can be cured at room temperature and meanwhile possesses good performances, which is able to reach the related standards of aramid paper honeycomb composite parts, thereby avoiding the deficiency, such as the cumbersome process and high production cost, of the current preparation of aramid honeycomb composite parts.

Furthermore, the present disclosure further provides a process for an aramid paper honeycomb composite part and a method for preparing the part at room temperature. In the present disclosure, by using the above-mentioned aramid epoxy resin glue, an aramid paper honeycomb core is bonded between prepreg cured sheets to form a sandwich structure, to obtain an aramid paper honeycomb composite part. The aramid paper honeycomb composite part provided by the present disclosure adopts pre-prepared the prepreg cured sheet in combination with the aramid epoxy resin glue, which enables it to be compounded at room temperature in the final compounding process, reducing production time and equipment investment, eliminating the need for large-scale equipment such as hot presses, large vacuum tanks, and high-temperature ovens during the processing of finished parts, thereby reducing production costs and realizing the industrial production of large quantities of aramid paper honeycomb composite panels. In addition, the prepared aramid paper honeycomb composite part effectively maintains the rigidity, flatness and strength of the aramid paper honeycomb core, and has good flame retardancy, heat preservation and mechanical properties. The method for preparing the aramid 1313 reticular fiber, the flame-retardant epoxy resin structural glue and the method for preparing an aramid paper honeycomb composite part provided by the present disclosure have simple processes and mild conditions, and are more suitable for large-scale production and promotion.

The experimental results have shown that for the aramid epoxy resin glue provided by the present disclosure, the fully cured glue has a Shore hardness of 85-95 D, and the cured glue block has a compressive strength greater than or equal to 55-65 MPa; and that it has a pulling force greater than or equal to 2000 N as using M6 screw in 10 mm deep, a shear strength (as kept at 60°C for 3 days and at normal temperature of 25°C for 7 days) greater than or equal to 10-15 MPa, and good low temperature performances, i.e., a low temperature down to -55°C. Moreover, the prepared aramid paper honeycomb composite part also has good overall performances, a tensile performance of 1.70-2.40 MPa, a flat compression performance of 2.0-3.6 MPa, a shear performance of 0.60-1.30 MPa, a climbing drum peel strength of 45-70 N×mm/mm, and a bending stiffness of 6.0×10⁷-11.0×10⁷ N·mm².

In order to further describe the present disclosure, the aramid 1313 reticular fiber and the method for preparing the same, and the aramid epoxy resin glue and the method for preparing the same provided by the present disclosure will be illustrated in detail in conjunction with examples. However, it should be understood that these embodiments are implemented under the premise of the technical solution of the present disclosure, and that the detailed implementation modes and specific operating procedures are given merely for illustrating the features and advantages of the present disclosure, rather than limiting the claims of the invention, and that the scope of protection of the invention is not limited to the following examples.

The materials used in the examples are all commercially available, and their brand and manufacturer are same with that written in the manual.

### Example 1

1) The polymerized aramid 1313 slurry formed a high-pressure spray through a platinum nozzle and was sprayed into a coagulating liquid. The coagulating liquid was a precipitating agent, a mixture formed by adding 50% of ionized water to 50% of dimethylacetylamide (DMAc) solution. The aramid 1313 slurry was sprayed at a flow rate of 500 mL/min. The mixture was stirred while spraying and entered into the sedimentation tank at a flow rate of 3000 mL/min synchronously supplemented with the coagulating liquid. After coagulation and precipitation of the aramid 1313 slurry for 30 minutes, wet fiber clusters were obtained.

2) The wet fiber clusters were sent into a drying machine for hot air drying at 60°C for 30 minutes, to obtain a fluffy aramid 1313 reticular fibers.

The aramid 1313 reticular fiber prepared in Example 1 of the present disclosure was tested.

Referring to Table 1, Table 1 is performance data of the aramid 1313 reticular fiber prepared according to the present disclosure.

**Table 1**

| NO. | test items | test result | NO. | test items | test result |
|---|---|---|---|---|---|
| 1 | intrinsic viscosity | 1.754 | 2 | heat shrinkage rate at 240°C | 15.31% |
| 3 | whiteness (%) | 82.54 | 4 | number of dry pulp (number/6.3 g) | 69 |
| 5 | dustiness | level 3 | 6 | | |
| Carried standard: GB/T3332, GB/T7974, GB/T1541 | | | | | |

The aramid 1313 reticular fiber prepared in Example 1 of the present disclosure was characterized.

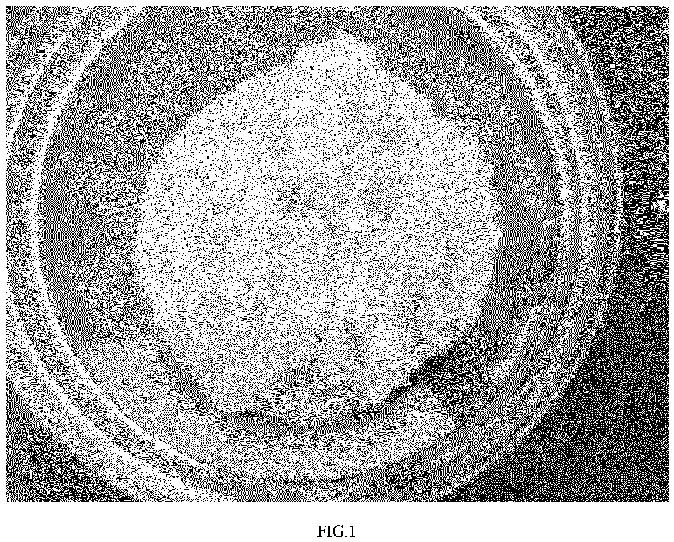

Referring to FIG. 1, FIG. 1 is an appearance view of the aramid 1313 reticular fiber prepared according to the present disclosure.

It can be seen from FIG. 1 that the aramid 1313 reticular fiber prepared according to the present disclosure has a macro morphology of a flocculent fiber cluster or a cotton-like fiber cluster, and the aramid 1313 fiber filaments are interwoven to form a 3D three-dimensional reticular structure.

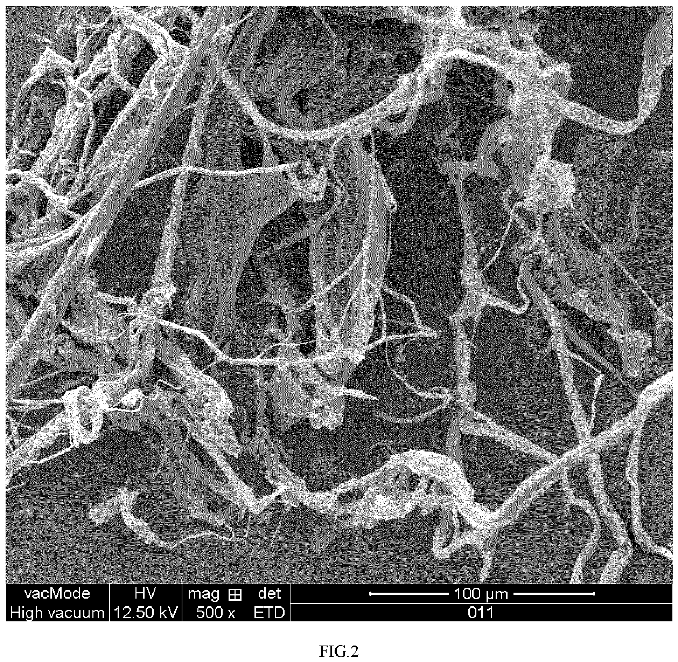

Referring to FIG. 2, FIG. 2 is a scanning electron micrograph of the aramid 1313 reticular fiber prepared according to the present disclosure.

It can be seen from FIG. 2 that microscopically the aramid 1313 reticular fiber prepared according to the present disclosure has a microscopic three-dimensional reticular structure formed by mutual cross-linking of filaments, strips and films.

### Example 2 (Formulation of Honeycon CP2015)

### a) The purchased A component epoxy resin 90%, an aramid 1313 reticular fiber 0.5%, silicon dioxide 4.5%, and a foamed filler 5.0% were mixed, to obtain A component aramid epoxy resin glue.

The time of the stirring and mixing was 30 min.

### b) B component epoxy resin (as a curing agent) was purchased.

The mass ratio of A component aramid epoxy resin glue and B component as the curing aid was preferably 4: 1.

A and B components were mixed at a mass ratio of 4: 1 and stirred for 10 min, to make a test sample block.

The sample block prepared in Example 2 of the present disclosure was tested for its performance.

Referring to Table 2, Table 2 is performance data of the aramid epoxy resin edge-sealing glue prepared in Example 2 of the present disclosure.

**Table 2 Test data of the sample block of aramid epoxy resin edge-sealing glue (Honeycon CP2015)**

| | |
|---|---|
| hardness of fully cured glue | Shore: ≥85D |
| compressive strength of cured glue block | ≥55 MPa |
| density of fully cured glue | 1.0 gram/cm³ |
| shear strength (MPa) | ≥10 MPa (maintained at 60°C for 3 days, and at a room temperature of 25°C for 7 days) |

### Example 3 (Formulation of Honeycon CP2016)

### a) The purchased A component epoxy resin 94%, aramid 1313 reticular fiber 0.3%, silicon dioxide 5.7% were mixed, to obtain A component aramid epoxy resin glue.

The time of the stirring and mixing was 30 min.

### b) B component epoxy resin (as a curing agent) was purchased.

The mass ratio of A component aramid epoxy resin glue and B component as the curing aid was preferably 4: 1.

A and B components were mixed at a mass ratio of 4: 1 and stirred for 10 min, to make a test sample block.

The sample block prepared in Example 3 of the present disclosure was tested for its performance.

Referring to Table 3, Table 3 is performance data of the aramid epoxy resin filling glue prepared in Example 3 of the present disclosure.

**Table 3 Test data of the sample block of the aramid epoxy resin filling glue (Honeycon CP2016)**

| | |
|---|---|
| hardness of fully cured glue | Shore: ≥92 D |
| compressive strength of cured glue block | ≥63 MPa |
| density of fully cured glue | ≤1.5 gram/cm³ |
| shear strength (MPa) | ≥15 MPa (maintained at 60°C for 3 days, and at a room temperature of 25 °C for 7 days) |

### Example 4 (Formulation of Honeycon CP2017)

### a) The purchased A component epoxy resin 92%, aramid 1313 reticular fiber 0.5%, silicon dioxide 7.5% were mixed, to obtain A component aramid epoxy resin glue.

The time of the stirring and mixing was 30 min.

### b) B component epoxy resin (as a curing agent) was purchased.

The mass ratio of A component aramid epoxy resin glue and B component as the curing aid was preferably 4: 1.

A and B components were mixed at a mass ratio of 4: 1 and stirred for 10 min, to make a test sample block..

The sample block prepared in Example 4 of the present disclosure was tested for its performance.

Referring to Table 4, Table 4 is performance data of the aramid epoxy resin molding glue prepared in Example 4 of the present disclosure.

**Table 4 Test data of the sample block of the aramid epoxy resin molding glue (Honeycon CP2017)**

| | |
|---|---|
| hardness of fully cured glue | Shore: ≥90D |
| compressive strength of cured glue block | ≥60 MPa |
| density of fully cured glue | ≤1.6 gram/cm³ |
| shear strength (MPa) | ≥13 MPa (maintained at 60°C for 3 days, and at a room temperature of 25°C for 7 days) |

### Example 5

### Preparation of a Prepreg Cured Sheet

The mold was cleaned with a solvent and checked for its flatness. 55 NC mold release agent was coated on the contact surface between the prepregs and the mold. Two or more layers of the glass fiber phenolic prepreg were laid into the mold evenly, and the mold was closed and put into a hot press. Temperature was raised from 20°C to 80°C at a heating rate of 1°C/ min and kept for 40 min under pressure of 0.1 MPa. Then, the temperature was raised to 120°C and kept for 60 min at a heating rate of 2°C/min under pressure of 0.2 MPa. At last, the temperature was raised to 150°C at a heating rate of 2°C/min and kept for 20 min under pressure of 0.3 MPa. After being cooled, it was taken out from the mold, and a qualified glass fiber phenolic prepreg cured sheet was obtained.

The glass fiber phenolic prepreg cured sheet prepared in Example 5 of the present disclosure was tested for its performance.

Referring to Table 5, Table 5 is performance data of the glass fiber phenolic prepreg cured sheet prepared in Example 5 of the present disclosure.

**Table 5**

| **test term** | **test standard** | **test temperature** | **test result (avg)/(min)** | **unit** |
|---|---|---|---|---|
| tensile strength | ASTM D638-2010 | 23°C | 386/371 | MPa |
| tensile modulus | ASTM D638-2010 | 23°C | 20.6/18.9 | GPa |
| bending strength | ISO 178-2010 | 23°C 80°C | 417/403 402/392 | MPa |
| bending modulus | ISO 178-2010 | 23°C 80°C | 25.0/23.3 20.6/18.3 | GPa |
| compressive strength | ASTM D695-2010 | 23°C | 339/323 | MPa |
| compressive modulus | ASTM D695-2010 | 23°C | 20.8/19.1 | GPa |
| interlaminar shear strength | JC/T 773-2010 | 23°C 80°C | 40.8/37.8 30.0/27.4 | MPa |

### Preparation of an Aramid Honeycomb Composite Part

The surface to be glued of two prepreg cured sheets was polished to be flat by sandpaper, and then dedusted and wiped with acetone solvent. The sheets were applied with Honeycon bonding glue CP2016 evenly in an amount of 330 g/m², and glued on the upper and lower surfaces of the aramid honeycomb to form a sandwich structure. It was put into a press, applied with a pressure of 0.2 MPa at room temperature about 25°C, and the initial curing was reached after 24 hours (which was transferred to the next process for further processing). Alternatively, it was put into a press, and applied with a pressure of 0.2 MPa at a constant temperature about 60°C, and the initial curing was reached after 3 hours (which was transferred to the next process for further processing).

Based on the drawing size, the honeycomb prepreg composite part (board) was subjected to edge trimming through a circular saw or a 5-axis machining center, and then to the edge banding processing by use of Honeycon edge-sealing glue CP2015 as an edge-sealing glue. After curing, it was placed on 5-axis machining center again for accurate edge trimming and hole opening. Honeycon bonding glue CP2016 was used to embed screw sleeves or hardware. Without being applied pressure, Honeycon can reach the initial curing after 24 hours at room temperature about 25°C or after 3 hours at constant temperature about 60°C.

The aramid honeycomb composite part prepared in Example 5 of the present disclosure was tested for its performance.

Referring to Table 6, Table 6 is the climbing drum peel test performance data of the aramid honeycomb composite part prepared in Example 5 of the present disclosure.

**Table 6**

| | | mechanical performance index | | | | model specification | | 60 mm aramid honeycomb prepreg |
|---|---|---|---|---|---|---|---|---|
| Carried standard | | GB/T1457-2005 | | | | test term | | climbing drum peel strength test on the composite part |

| **test parameter** | | | | | | | | |
|---|---|---|---|---|---|---|---|---|
| test temperature | | | 22°C | | | relative humidity | | 55% |
| test speed (mm/min) | | | 30 | | | test date | | 2019-04-19 |
| **test data** | | | | | | | | |

| sample NO. | width mm | thickness mm | maximum load N | average load N | empty load N | net load N | average strength N.mm/mm | |
|---|---|---|---|---|---|---|---|---|
| 1 | 60 | 1 | 338.9 | 249 | 82 | 167 | 34.8 | |
| blank board | 60 | 1 | 91.8 | 82 | 82 | - | - | |
| 2 | 60 | 1 | 456.0 | 384 | 82 | 302 | 62.9 | |
| 3 | 60 | 1 | 425.3 | 340 | 82 | 258 | 53.8 | |
| 4 | 60 | 1 | 335.7 | 268 | 82 | 186 | 38.8 | |
| 5 | 60 | 1 | 298.8 | 246 | 82 | 164 | 34.2 | |
| average value | | | | | | | 44.9 | |

| | | | | | | | | |
|---|---|---|---|---|---|---|---|---|
| PS: According to the test standard, 5 samples were tested at the same time to obtain the average value. | | | | | | | | |

Referring to Table 7, Table 7 is performance data of the aramid honeycomb composite part prepared in Example 5 of the present disclosure.

**Table 7**

| **physical performance of the aramid honeycomb composite part** | | | |
|---|---|---|---|
| tensile performance | 1.83 MPa | GB/T1452-2005 | compliant |
| flat compression performance | 2.23 MPa | GB/T1453-2005 | compliant |
| shear performance | 1.23 MPa | GB/T1455-2005 | compliant |
| climbing drum peel strength | 44.9 N·mm/mm | GB/T1457-2005 | compliant |
| bending stiffness | 7.84×10⁷ N·mm² | GB/T1456-2005 | compliant |

### Example 6

### Preparation of a Fast-cured Prepreg Cured Sheet

The mold was cleaned with a solvent and checked for its flatness. 55 NC mold release agent was coated on the contact surface between the prepregs and the mold. Two or more layers of the glass fiber phenolic prepreg were laid into the mold evenly, and the mold was closed and put into a hot press. Temperature was raised from 60°C to 145°C at a heating rate of 3°C/min and kept for 30 min under pressure of 0.25 MPa. After being cooled to 60°C, it was taken out from the mold, and a qualified fast-cured glass fiber phenolic prepreg cured sheet was obtained.

The glass fiber phenolic prepreg cured sheet prepared in Example 6 of the present disclosure was tested for its performance.

Referring to Table 8, Table 8 is performance data of the glass fiber phenolic prepreg cured sheet prepared in Example 6 of the present disclosure.

**Table 8**

| **test term** | **test standard** | **test temperature** | **test result (avg)/(min)** | **unit** |
|---|---|---|---|---|
| tensile strength | ASTM D638-2010 | 23°C | 380/368 | MPa |
| tensile modulus | ASTM D638-2010 | 23°C | 20.4/18.8 | GPa |
| bending strength | ISO 178-2010 | 23°C | 415/401 | MPa |
| | | 80°C | 403/390 | |
| bending modulus | ISO 178-2010 | 23°C | 25.0/23.3 | GPa |
| | | 80°C | 19.8/18.1 | |
| compressive strength | ASTM D695-2010 | 23°C | 335/323 | MPa |
| compressive modulus | ASTM D695-2010 | 23°C | 20.2/19.2 | GPa |
| interlaminar shear strength | JC/T 773-2010 | 23°C | 39.8/37.7 | MPa |
| | | 80°C | 30.1/27.2 | |

### Preparation of the Aramid Honeycomb Composite Part

The surface to be glued of two prepreg cured sheets was polished to be flat by sandpaper, and then dedusted and wiped with acetone solvent. The sheets were applied with Honeycon bonding glue CP2016 evenly in an amount of 330 g/m², and glued on the upper and lower surfaces of the aramid honeycomb to form a sandwich structure. It was put into a press, applied with a pressure of 0.2 MPa at room temperature about 25°C, and the initial curing was reached after 24 hours (which was transferred to the next process for further processing). Alternatively, it was put into a press, and applied with a pressure of 0.2 MPa at a constant temperature about 60°C, and the initial curing was reached after 3 hours (which was transferred to the next process for further processing).

Based on the drawing size, the honeycomb prepreg composite part (board) was subjected to edge trimming through a circular saw or a 5-axis machining center, and then to the edge banding processing by use of Honeycon edge-sealing glue CP2015 as an edge-sealing glue. After curing, it was placed on 5-axis machining center again for accurate edge trimming and hole opening. Honeycon bonding glue CP2016 was used to embed screw sleeves or hardware. Without being applied pressure, Honeycon can reach the initial curing after 24 hours at room temperature about 25°C or after 3 hours at constant temperature about 60°C.

The aramid honeycomb composite part prepared in Example 6 of the present disclosure was tested for its performance.

Referring to Table 9, Table 9 is climbing drum peel test performance data of the aramid honeycomb composite part prepared in Example 6 of the present disclosure.

**Table 9**

| | | mechanical performance index | | | | model specification | | 60 mm aramid honeycomb prepreg |
|---|---|---|---|---|---|---|---|---|
| Carried standard | | GB/T1457-2005 | | | | test term | | climbing drum peel strength test on the composite part |

| **test parameter** | | | | | | | | |
|---|---|---|---|---|---|---|---|---|
| test temperature | | | 22°C | | | relative humidity | | 55% |
| test speed (mm/min) | | | 30 | | | test date | | 2019-04-24 |
| **test data** | | | | | | | | |

| sample NO. | width mm | thickness mm | maximum load N | average load N | empty load N | net load N | average strength N.mm/mm | |
|---|---|---|---|---|---|---|---|---|
| 1 | 60 | 1 | 338.0 | 248 | 82 | 165 | 34.7 | |
| blank board | 60 | 1 | 91.6 | 82 | 82 | - | - | |
| 2 | 60 | 1 | 455.0 | 380 | 82 | 299 | 62.0 | |
| 3 | 60 | 1 | 423.3 | 340 | 82 | 256 | 53.3 | |
| 4 | 60 | 1 | 339.7 | 269 | 82 | 196 | 41.8 | |
| 5 | 60 | 1 | 358.8 | 286 | 82 | 178 | 40.2 | |
| average value | | | | | | | 46.4 | |

| | | | | | | | | |
|---|---|---|---|---|---|---|---|---|
| PS: According to the test standard, 5 samples were tested at the same time to obtain the average value. | | | | | | | | |

Referring to Table 10, Table 10 is performance data of the aramid honeycomb composite part prepared in Example 6 of the present disclosure.

**Table 10**

| **physical performance of the aramid honeycomb composite part** | | | |
|---|---|---|---|
| tensile performance | 1.80 MPa | GB/T1452-2005 | compliant |
| flat compression performance | 2.19 MPa | GB/T1453-2005 | compliant |
| shear performance | 1.25 MPa | GB/T1455-2005 | compliant |
| climbing drum peel strength | 46.6 N·mm/mm | GB/T1457-2005 | compliant |
| bending stiffness | 7.81×10⁷N·mm² | GB/T1456-2005 | compliant |

### Example 7

### Preparation of the Prepreg Cured Sheet

The mold was cleaned with a solvent and checked for its flatness. 55 NC mold release agent was coated on the contact surface between the prepregs and the mold. Two or more layers of the glass fiber phenolic prepreg were laid into the mold evenly, and the mold was closed and put into a hot press. Temperature was raised from 20°C to 80°C at a heating rate of 1°C/ min and kept at 40 min under pressure of 0.1 MPa. The temperature was then raised to 120°C at a heating rate of 2°C/min and kept at 60 min under pressure of 0.2 MPa. At last, the temperature was raised to 150°C at a heating rate of 2°C/min and kept at 20 min under pressure of 0.3 MPa. After being cooled, it was taken out from the mold, and a glass fiber phenolic prepreg cured sheet was obtained.

The glass fiber phenolic prepreg cured sheet prepared in Example 7 of the present disclosure was tested for its performance.

Referring to Table 11, Table 11 is performance data of the glass fiber phenolic prepreg cured sheet prepared in Example 7 of the present disclosure.

**Table 11**

| **test term** | **test standard** | **test temperature** | **test result (avg)/(min)** | **unit** |
|---|---|---|---|---|
| tensile strength | ASTM D638-2010 | 23°C | 385/377 | MPa |
| tensile modulus | ASTM D638-2010 | 23°C | 21.1/18.4 | GPa |
| bending | ISO 178-2010 | 23°C | 416/405 | MPa |
| strength | | 80°C | 399/392 | |
| bending | ISO 178-2010 | 23°C | 24.8/23.2 | GPa |
| modulus | | 80°C | 20.9/18.0 | |
| compressive strength | ASTM D695-2010 | 23°C | 334/327 | MPa |
| compressive modulus | ASTM D695-2010 | 23°C | 21.7/19.3 | GPa |
| interlaminar | JC/T 773-2010 | 23°C | 40.0/37.7 | MPa |
| shear strength | | 80°C | 31.0/28.4 | |

### Preparation of a Heat-cured Aramid Honeycomb Composite Part

The surface to be glued of two prepreg cured sheets was polished to be flat by sandpaper, and then dedusted and wiped with acetone solvent. The sheets were applied with Honeycon bonding glue CP2016 evenly in an amount of 330 g/m², and glued on the upper and lower surfaces of the aramid honeycomb to form a sandwich structure. It was put into a press, applied with a pressure of 0.2 MPa at a constant temperature about 60°C, and the initial curing was reached after 3 hours (which was transferred to the next process for further processing).

Based on the drawing size, the honeycomb prepreg composite part (board) was subjected to edge trimming through a circular saw or a 5-axis machining center, and then to the edge banding processing by use of Honeycon edge-sealing glue CP2015 as an edge-sealing glue. After curing, it was placed on 5-axis machining center again for accurate edge trimming and hole opening. Honeycon bonding glue CP2016 was used to embed screw sleeves or hardware. Without being applied pressure, Honeycon can reach the initial curing after 24 hours at room temperature about 25°C or after 3 hours at constant temperature about 60°C.

The aramid honeycomb composite part prepared in Example 7 of the present disclosure was tested for its performance.

Referring to Table 12, Table 12 is climbing drum peel test performance data of the aramid honeycomb composite part prepared in Example 7 of the present disclosure.

**Table 12**

| | | mechanical performance index | | | | model specification | | 60 mm aramid honeycomb prepreg |
|---|---|---|---|---|---|---|---|---|
| Carried standard | | GB/T1457-2005 | | | | test term | | climbing drum peel strength test on the composite part |
| **test parameter** | | | | | | | | |
| test temperature | | | 23°C | | | relative humidity | | 60% |
| test speed (mm/min) | | | 30 | | | test date | | 2019-04-27 |
| test data | | | | | | | | |
| sample NO. | width mm | thickness mm | maximum load N | average load N | empty load N | net load N | average strength N.mm/mm | |
| 1 | 60 | 1 | 392.0 | 353 | 82 | 197 | 46.4 | |
| blank board | 60 | 1 | 92.0 | 82 | 82 | - | - | |
| 2 | 60 | 1 | 450.0 | 381 | 82 | 312 | 63.8 | |
| 3 | 60 | 1 | 378.8 | 340 | 82 | 194 | 41.2 | |
| 4 | 60 | 1 | 335.7 | 268 | 82 | 186 | 39.1 | |
| 5 | 60 | 1 | 425.3 | 359 | 82 | 258 | 53.8 | |
| average value | | | | | | | 48.9 | |

| | | | | | | | | |
|---|---|---|---|---|---|---|---|---|
| PS: According to the test standard, 5 samples were tested at the same time to obtain the average value. | | | | | | | | |

Referring to Table 13, Table 13 is performance data of the aramid honeycomb composite part prepared in Example 7 of the present disclosure.

**Table 13**

| **physical performance of the aramid honeycomb composite part** | | | |
|---|---|---|---|
| tensile performance | 1.85 MPa | GB/T1452-2005 | compliant |
| flat compression performance | 2.26 MPa | GB/T1453-2005 | compliant |
| shear performance | 1.27 MPa | GB/T1455-2005 | compliant |
| climbing drum peel strength | 48.9 N·mm/mm | GB/T1457-2005 | compliant |
| bending stiffness | 7.90×10⁷ N·mm² | GB/T1456-2005 | compliant |

The aramid 1313 reticular fiber and method for preparing the same, a series of room temperature curable aramid flame-retardant epoxy resin structural glues and a method for preparing the same, and an aramid paper honeycomb composite part provided by the present disclosure were introduced above in detail. To illustrate the principle and implementation of the present disclosure, the specific examples are used herein. Description of the above examples, including the best mode, is only intended to facilitate understanding of the method and core concept of the present invention, and to enable any one of the skilled in the art to implement the present invention, including manufacturing and using any device or system, and implementing any combined method. It should be noted that for those skilled in the art, various improvements and modifications may be made without departing from the principle of the present disclosure, and these improvements and modifications should also fall within the protection scope of the present invention. The protection scope of the present invention is defined by the claims, and other embodiments that a person skilled in the art would know can be included. The said other embodiments should also be included in the scope of the claims, if they contain structural elements that are not different from the literal expression of claims, or contain equivalent structural elements that are not substantially different from the literal expression of the claims.

## Claims

1. An aramid 1313 reticular fiber, wherein the aramid 1313 reticular fiber is a flocculent fiber cluster aramid 1313 fiber, and aramid 1313 fiber filaments are interwoven to form a three-dimensional reticular structure.

2. The aramid 1313 reticular fiber according to claim 1, wherein the aramid 1313 reticular fiber has a fineness of 1-2 D; and
microscopically, the aramid 1313 reticular fiber has a microscopic three-dimensional reticular structure formed by mutual cross-linking of filaments, strips and films; wherein
the filaments have a diameter of 10-500 nm;
the strips have a diameter of 0.5-20 µm; and
the films have a diameter of 5-50 µm.

3. A method for preparing an aramid 1313 reticular fiber, comprising the following steps:
1) spraying a polymerized aramid 1313 slurry into a coagulating liquid, and performing coagulation and precipitation under stirring to obtain a wet fiber cluster; and
2) subjecting the wet fiber cluster obtained from the above step to hot air drying, to obtain a fluffy aramid 1313 reticular fiber.

4. The method according to claim 3, wherein the coagulating liquid includes dimethylacetylamide solution;
the aramid 1313 slurry is sprayed at a flow rate less than or equal to 1000 mL/min;
the aramid 1313 slurry and the coagulating liquid are present in a mass ratio of 1: (2-20);
the coagulation and precipitation are performed for a duration of 5-40 min; and
the hot air drying is performed at a temperature of 60-85°C.

5. An aramid epoxy resin glue, based on mass percentage of raw materials, comprising:
90-94 parts by weight of an epoxy resin;
3.5-7.5 parts by weight of silicon dioxide;
0-10 parts by weight of a foamed filler; and
0.3-0.5 parts by weight of an aramid 1313 reticular fiber.

6. The aramid epoxy resin glue according to claim 5, wherein the epoxy resin includes a flame-retardant epoxy resin;
the aramid 1313 reticular fiber has a length of 1-7 mm;
the aramid 1313 reticular fiber has an aspect ratio of (50-1000): 1;
the silicon dioxide includes a fumed silica powder;
the foamed filler includes a hollow glass microsphere;
the aramid epoxy resin glue includes one or more of an aramid epoxy resin edge-sealing glue, an aramid epoxy resin filling glue and an aramid epoxy resin molding glue;
in the aramid epoxy resin edge-sealing glue or the aramid epoxy resin filling glue, the silicon dioxide is present in an amount of 3.5-5.7 parts by weight, based on mass percentage of raw materials; and
in the aramid epoxy resin molding glue, the silicon dioxide is present in an amount of 5.7-7.5 parts by weight, based on mass percentage of raw materials.

7. The aramid epoxy resin glue according to claim 6, wherein the silicon dioxide has a particle size of 12 nm-6 µm;
the aramid epoxy resin edge-sealing glue has a density of 0.6-1.0 g/cm³;
the aramid epoxy resin edge-sealing glue is used for edge banding of a lightweight honeycomb composite material;
the aramid epoxy resin filling glue has a density of 1.4-1.6 g/cm³;
the aramid epoxy resin filling glue is used for bonding hardware on a resin composite material;
the aramid epoxy resin molding glue has a density of 0.9-1.6 g/cm³;
the aramid epoxy resin molding glue is dough-like before curing; and
the aramid epoxy resin molding glue is used for modeling on a resin composite material.

8. A method for preparing the aramid epoxy resin glue according to any one of claims 5-7, comprising the following step:
a) mixing an aramid 1313 reticular fiber, an epoxy resin and silicon dioxide, to obtain an aramid epoxy resin glue.

9. The method according to claim 8, wherein in step a), a foamed filler is further included;
the mixing is performed for a duration of 10-30 min;
the aramid epoxy resin glue is added with a curing aid before use;
the curing aid includes a modified amine curing agent, an accelerating agent and a coupling agent;
the aramid epoxy resin glue and the curing aid have a mass ratio of 4: 1; and
the aramid epoxy resin glue has an open time of 30-40 min.

10. An aramid paper honeycomb composite part, comprising prepreg cured sheets, an aramid paper honeycomb core and a Honeycon glue; wherein
the aramid paper honeycomb core is compounded between the prepreg cured sheets, forming a sandwich structure;
the Honeycon glue includes a Honeycon bonding glue;
the Honeycon bonding glue is bonded between the aramid paper honeycomb core and the prepreg cured sheets; and
the Honeycon glue is the aramid epoxy resin glue according to any one of claims 5-7 or the aramid epoxy resin glue prepared using the method according to any one of claims 8-9.
